(19) Europäisches Patentamt
European Patent Office
Office européen des brevets

(11) **EP 0 685 283 B1**

(12) **EUROPÄISCHE PATENTSCHRIFT**

(45) Veröffentlichungstag und Bekanntmachung des Hinweises auf die Patenterteilung:
**28.01.1998 Patentblatt 1998/05**

(51) Int. Cl.$^6$: **B23C 3/04**, B23B 5/28

(21) Anmeldenummer: **95108066.2**

(22) Anmeldetag: **26.05.1995**

(54) **Radsatzbearbeitungsverfahren und Radsatzbearbeitungsmaschine**

Wheelset truing process and wheelset truing machine

Procédé d'usinage d'essieux montés et machine pour l'usinage d'essieux montés

(84) Benannte Vertragsstaaten:
**CH ES FR GB IT LI**

(30) Priorität: **30.05.1994 DE 4418823**

(43) Veröffentlichungstag der Anmeldung:
**06.12.1995 Patentblatt 1995/49**

(73) Patentinhaber:
**NILES-SIMMONS Industrieanlagen GmbH**
**D-09117 Chemnitz (DE)**

(72) Erfinder:
• **Robotta, Reinhard**
**D-09306 Erlau (DE)**
• **Schröter, Gunter**
**D-09116 Chemnitz (DE)**
• **Gerhard, Wolfgang**
**D-09119 Chemnitz (DE)**
• **Naumann, Hans J.**
**Albany, New York (US)**

(74) Vertreter: **Möhring, Friedrich**
**Grättinger & Partner (GbR)**
**Postfach 16 55**
**82306 Starnberg (DE)**

(56) Entgegenhaltungen:
CH-A- 260 138        GB-A- 2 091 619

**Beschreibung**

Die Erfindung betrifft ein Radsatzbearbeitungsverfahren und eine Radsatzbearbeitungsmaschine zur spangebenden Profilierung von Radsätzen schienengebundener Fahrzeuge gemäß dem Oberbegriff des Patentanspruches 1 bzw. des Patentanspruches 4. Die Radsätze sind dabei in Zentriermitteln aufgenommen und werden form- oder kraftschlüssig angetrieben.

Zentriermittel können Zentrierspitzen aber auch Reib- und oder Stützrollen sein. Als Radsatz wird jede Art eines Radsatzes, auch die Einzelradaufhängung im Fahrzeug verstanden. Es sind Fräsverfahren zur Radsatzbearbeitung bekannt, wie z. B. Umfangsprofilfräsen, auch als Rundfräsen bezeichnet, für die Laufflächen und Spurkranzbearbeitung, sowie Stirnfräsverfahren für die Bearbeitung der Stirnflächen von Radsätzen. Aus der beispielsweise den nächstkommenden Stand der Technik zeigenden CH-PS 260 138 ist ein Verfahren zum achsparallelen Umfangsprofilfräsen von Eisenbahnradkränzen bekannt. Damit sollte seinerzeit die Produktivität, durch die Erhöhung der Schnittgeschwindigkeit, gegenüber auf Drehbänken bearbeiteten Radkränzen erhöht werden. Das Radprofil wurde mit als Schwungmasse ausgebildeten Messerköpfen ganz, oder durch Entnahme von Messer aus dem Messerkopf, teilweise mit Messern für die Lauffläche oder den Spurkranz, jedoch durch Bearbeitung mittels Umfangsprofilfräsen erzeugt. In der DE-PS 906037 wird eine Radsatzfräsmaschine vorgestellt, die den Nachteil der jeweils profilbezogenen Anwendung der Werkzeuge dadurch mindert, in dem ein schneller Fräskopfwechsel realisiert wird und oder je eine Frässpindel zu beiden Seiten des Radsatzes angebracht wird. Bei der Werkzeugentwicklung hatte sich ein Fräswerkzeug, gemäß der US 3.540.103, daß das Radprofil für die Lauffläche und den Spurkranz gespeichert hat, durchgesetzt. Die angebrachten Schneidplatten sind in Umfangsrichtung gestaffelt. Damit wird durch Umfangsprofilfräsen das Radprofil erzeugt.

Bei den genannten Verfahren und Maschinen sind die Wekzeugachsen zur Radsatzachse parallel angeordnet und es ist kein axialer Vorschub des Werkzeuges vorgesehen bzw. möglich.

Nachteilig bei dem achsparallelen Umfangsprofilfräsen ist, daß für jede Profilform ein Profilfräser vorzuhalten ist. Ein häufiger Werkzeugwechsel wird bei der Bearbeitung unterschiedlicher Profilformen notwendig. Diese Arbeit ist zeit- und personalaufwendig. Ebenfalls sind die Anschaffungskosten für die Werkzeuge hoch.

Der Erfindung liegt die Aufgabe zugrunde ein Verfahren und eine Maschine der eingangs genannten Art zu schaffen, bei dessen mit ein- und demselben Werkzeug beliebige Radprofile herstellbar sind. Das Bearbeitungsverfahren Fräsen, welches zwangsweise einen für hohe Maschinenautomatisierung idealen Spanbruch und damit eine hohe Prozeßsicherheit garantiert, soll weiter entwickelt, das hohe Zeitzerspanungsvolumen des Umfangsprofilfräsers aber weitgehend beibehalten werden. Hohe Zeitzerspanungsvolumen sollen besonders bei der Unterflurbearbeitung mit kleinen Schnittkräften und damit kleinen erforderlichen Reibkräften unter Einhaltung der Oberflächenrauheitstoleranzen verwirklicht werden. Die Radsatzprofilbearbeitung soll weiterhin überwiegend bei gleicher Spanflugrichtung erfolgen. Es sollten einfachster Werkzeugwechsel und kurze Werkzeugwechselzeiten möglich sein. Dabei soll mit aufwandsarmen und besonderen für die Radsatzbearbeitung optimierten Fräswerkzeugen, die hohe Schnittgeschwindigkeiten zulassen und damit der Schneidstoffentwicklung folgen können, gefräst werden.

Nachfolgend sollen dafür wichtige Begriffe geklärt werden. Unter Drehfräsen ist ein spanendes Fertigungsverfahren zu verstehen, bei dem die Prinzipien des Drehens und Fräsens derart kombiniert sind, daß im allgemeinen rotationssymmetrische Flächen erzeugt werden. Das Werkstück ist um eine Rotationsachse angetrieben zur Erzeugung der hauptsächlichen Vorschubbewegung. Das Fräswerkzeug ist drehangetrieben zur Erzeugung der hauptsächlichen Schneidbewegung. Die Lage der Werkzeugachse zur Werkstückachse ist beliebig. Man unterscheidet achsparalleles Drehfräsen (Fräserachse und Werkstückachse sind parallel) und achssenkrechtes Drehfräsen (Fräserachse sind senkrecht zur Werkstückachse angeordnet).

Bahngesteuertes Profildrehfräsen, ist Drehfräsen bei dem das rotationssymmetrische Werkstückprofil durch gesteuerte Vorschubbewegung erzeugt wird. Das Profil des Fräsers entspricht nicht der Form des erzeugten Werkstückprofils. Man unterscheidet CNC- Profildrehfräsen und Kopier- Profildrehfräsen (2- achsig axial und radial). Unter Radprofil soll die Lauffläche mit Fase sowie der Spurkranz einschließlich äußerer und innerer Radreifenstirnfläche verstanden werden.

Erfindungsgemäß wird die Aufgabe gemäß dem gekennzeichneten Teil des Patentanspruches 1, durch die Anwendung des 2- achsig (axial und radial) CNC-gesteuerten achsparallelen oder achssenkrechten Profil- Drehfräsens gelöst, wobei mindestens ein Fräswerkzeug verwendet wird, welches das Radprofil nicht oder teilweise gespeichert hat und mit wenigstens zwei Schneidenkränzen mit für das achsparallele Profildrehfräsen gleicher und für das achssenkrechte Profildrehfräsen einander entgegengesetzter Dreh- bzw. Schnittrichtung, wobei zur Bearbeitung der gesamten oder teilweisen Rad- Profilbereiches durch einen ersten Schneidenkranz ein erster Radprofilbereich und mit einem weiteren Schneidenkranz, ein weiterer Radprofilbereich oder Restradprofilbereich bei jeweils annähernd gleicher Spanflugrichtung erzeugt wird. Vorteilhaft ist, daß das Werkzeug nicht mehr Träger der gewünschten Profilform ist. Jede durch den Bahnbetrieb erforderliche Profilform ist mit ein-und demselben Werkzeug in einem Zug, von der äußeren bis zur inneren Radreifenstirnfläche herstellbar. Es sind auch Teilbearbeitungen, wie abschnittsweises Bearbeiten des Spurkranzes oder der Radkranzstirnflächen, möglich. Mit denm vorgeschlagenen Fräswerkzeugen und eines zweiachsigen Vorschubes kann das Profil zweimal abwärts bearbeitet werden. Verfahrensbedingt erfolgt automatensicherer Spanbruch. Technologische Daten, zur Erzielung bestimmter Toleranzen, z. B. Rauheit, können profilabschnittsweise unterschiedlich eingestellt werden. Es wird damit auch ein Bearbeitungsverfahren, das eine effektive Profilierung nach nationalen Profilnormen ermöglicht, vorgeschlagen. Die Anwendung des erfindungsgemäßen Verfahrens ist für die Über- und Unterflurbearbeitung geeignet. Mit diesen Verfahren werden ideale Bruchspäne erzeugt. Die Spanflugrichtung ist hauptsächlich von der Anordnung des Fräswerkzeuges zum Radprofil, der Eingriffsbreite und deren Schnittrichtung abhängig. Dadurch wird, nach dem vorgeschlagenen Verfahren, bei der Radprofilbearbeitung, bei annähernd gleicher Spanflugrichtung, auch der Späneaustritt tangential zum Radprofil verstanden.

Die Spanflugrichtung wird auch durch weitere Parameter beeinflußt z. B. die Drehzahl und die Drehrichtung und wird somit zusätzlich variierbar. Die annähernd gleiche bzw. variierbare Spanflugrichtung wird auch dazu genutzt, bei definierter Spanform, das Einwalzen von Spänen in das bearbeitete Radprofil auszuschließen. Außerdem ist die Abführung der Späne problemlos möglich.

Bei bahngesteuerten achsparallelen Profildrehfräsen bleibt die Flugrichtung der Späne konstant, unabhängig davon ob der Fräser an der äußeren oder inneren Radkranzstirnfläche oder Lauffläche spant und oder im Gleich- oder Gegenlauf gearbeitet wird. Für das achssenkrechte Profildrehfräsen kann dieser Effekt durch eine entsprechende Drehrichtungsänderung des Fräswerkzeuges erreicht werden.

Nach einer Ausgestaltung des erfindungsgemäßen Verfahrens wird in Anspruch 2 dazu eine bevorzugte Möglichkeit vorgeschlagen. Die Anwendung des achssenkrechten Profildrehfräsen wird durch die verwendbaren Kleineren Werkzeugdurchmesser mit niedrigeren Kosten gegenüber dem achsparallelen Fräswerkzeug interessant. Es sind mehrere Schneiden, bei Kleiner Bearbeitungstiefe, gleichzeitig im Eingriff. Gegenüber dem Umfangsfräsen wird ein sanfterer Ein- und Austritt der Schneidplatten wirksam. Als Scheitelpunkt wird annähernd der Punkt oder die Linie bezeichnet, der im Profilbereich der Spurkranzkuppe den größten Abstand zur Radsatzachse hat.

Als weitere Ausführungsform des erfindungsgemäßen Verfahrens wird nach Anspruch 3 vor geschlagen, daß beim achssenkrechten Profildrehfräsen die Drehachse der Fräswerkzeuge nur annähernd rechtwinklig zur Radsatzdrehachse ausgerichtet wird, bei einer vorzugsweisen Exzentrizität = 0. Dadurch ist der Fräsereingriffsbogen am längsten und die Hauptschnittkraftschwankungen sind am geringsten. Die Zerspanung wird dadurch mit der jeweils bearbeitungsfähigen Seite des Werkzeuges optimal durchgeführt. Durch die Exzentrizität = 0 wird ein hohes Zeitzerspanungsvolumen bei guter Oberflächenqualität erreicht.

Erfindungsgemäß wird dazu gemäß dem kennzeichnenden Teil des Patentanspruches 4, eine Radsatzbearbeitungsmaschine vorgeschlagen, bei der das oder die Fräswerkzeuge das (die) das Radprofil nicht oder nur teilweise gespeichert hat (haben), zum 2- achsig (axial und radial) CNC- gesteuerten achsparallelen oder achssenkrechten Profil- Drehfräsen achsparallel oder achssenkrecht zur Radsatzdrehachse ausrichtbar ist (sind), und wenigstens zwei Schneidenkränze aufweist (aufweisen), mit für das achsparallele Profildrehfräsen gleicher und für das achssenkrechte Profildrehfräsen einander entgegengesetzter Schnitt-bzw. Bearbeitungsrichtung, wobei die Drehrichtung des Fräswerkzeuges umkehrbar ist. Die Anordnung von zwei Schneidenkränzen, mit zum ersten Schneidenkranz entgegengesetzter Arbeitsrichtung, gestattet auch bei achssenkrechter Anordnung des Fräswerkzeuges die gesamte Profilbearbeitung ohne Drehrichtungsänderung des Radsatzes, bei gleicher Spanflugrichtung mit Drehrichtungsänderung des Werkzeuges am Scheitelpunkt im Profilbereich der Spurkranzkuppe des Radprofiles. Damit wird das Einwalzen von Spänen in das bearbeitete Radprofil ausgeschlossen. Weiterhin besteht die Möglichkeit ausgehend von der Spurkranzkuppe jeweils abwärts die bahngesteuerte Bearbeitung durchzuführen. Mit oder ohne Drehrichtungsänderung des Radsatzes oder des Werkzeuges kann Gleich- oder Gegenlauffräsen durchgeführt werden. Als Drehfräser kommen vorzugsweise Werkzeuge zum Einsatz, welche speziell für die Radprofilbearbeitung ausgelegt sind und die Erzeugung eines genügend genauen Profiles ermöglichen. Die Vorteile dieser Erfindung bestehen insbesondere darin, daß z.B. mit einem Werkzeug achsparalleles oder achssenkrechtes Profildrehfräsen durchgeführt werden kann und alle möglichen Radprofile erzeugt werden können. Daneben kann mit dem gleichen einfachen Werkzeug auch eine Stirnseitenbearbeitung, beliebig die linke und rechte Seite, erfolgen. Die Werkzeuganschaffungskosten sind deutlich niedriger gegenüber dem Umfangsprofilfräser. Besonders bei kraftschlüssigen Antrieb ist es möglich mit den spezifischen Bedingungen des bahngesteuerten umlaufenden Werkzeuges, ohne Drehzahlerhöhung des Radsatzes, dessen Erhöhung ohnehin begrenzt ist, die Schnittgeschwindigkeit zu erhöhen. Weiterhin sind die An- und Ausschnittbedingungen weicher als z.B. beim Umfangsprofilfräsen.

Eine weitere Ausgestaltung der Radsatzbearbeitungsmaschine erfolgt nach Anspruch 5. Als Fräswerkzeuge kommen vorzugsweise Drehfräser zum Einsatz, welche speziell für die Radsatzbearbeitung ausgelegt sind und die Erzeugung eines genügend genauen Radprofiles ermöglichen. Die Radiengestaltung soll so erfolgen, daß optimale Schnittbedingungen und hohe Oberflächenqualität gewährleistet ist.

Zweckmäßig ist es, für die Drehfräswerkzeuge Rundschneidplatten, vorzugsweise Wendeschneidplatten, einzusetzen. Rundschneidplatten ermöglichen eine mehrfache Nutzung. Die Anschaffung ist preiswert und die Werkzeugkosten sind dadurch günstig.

Eine vorteilhafte Ausgestaltung der Erfindung der Radsatzbearbeitungsmaschine ist dadurch gekennzeichnet, daß das Fräswerkzeug bei achsparalleler Anordnung aus einem Umfangsprofilfräser, der das Radprofil teilweise gespeichert hat, einem Freiraum für den Spurkranz bei achsparalleler Anordnung und zusätzlich aus mindestens einem Schneidenkranz besteht. Damit kann z. B. das Profil der Lauffläche durch achsparalleles Umfangsprofilfräsen bearbeitet werden und mit separat angebrachten Schneidenkränzen die restliche Profilbearbeitung durch bahngesteuertes Profildrehfräsen erfolgen. Ein solches kombiniertes Drehfräswerkzeug enthält vorzugsweise bei achsparallelen Anordnung zwischen den Schneidenkränzen für das Umfangsprofilfräsen und den Schneidenkränzen für die Spurkranzbearbeitung eine Aussparung die größer ist als die Spurkranzhöhe und Spurkranzbreite. Andererseits können auch die für die bahngesteuerte Bearbeitung vorgesehenen Schneidenkränze aus dem Werkzeuggrundkörper soweit herausragen, daß keine Behinderung bei der Profilbearbeitung besteht. Die Fase am Radprofil kann ebenfalls mit den separaten Schneidenkränzen bahngesteuert angebracht werden. Insgesamt können die Vorteile des hohen Zeitzerspanungsvolumens des Umfangsprofilfräsens und die hohe Profil-Flexibilität des bahngesteuerten Profildrehfräsens kombiniert werden. Diese Kombination ist sinnvoll, da Bahngesellschaften oft Profile haben, die in der Lauffläche übereinstimmen, nicht jedoch im Spurkranz. Diese Anwendung ist besonders dann vorteilhaft, wenn Radsätze mit relativ konstanten Profil oder mit geringerem Verschleiß auf der Lauffläche, zubearbeiten sind.

Die Erfindung wird nachfolgend anhand bevorzugter Ausführungsbeispiele näher erläutert.

Es zeigen

Fig. 1    Die Profilierung mit einem Fräswerkzeug mit zwei Schneidkränzen achssenkrecht
Fig. 2    Profilierung mit einem scheibenförmigen Fräswerkzeug mit zwei Schneidenkränzen achsparallel
Fig. 3    Fräswerkzeug mit zwei Schneidenkränzen zur Profilierung von Radsätzen
Fig. 4    Fräswerkzeug für Umfangsprofilfräsen im Laufflächenbereich und Schneidenkränzen zur bahngesteuerten Profil-Drehfräsbearbeitung

Verwendete Bezugszeichen:

1    Rad /Radsatz
2    Profilbereich Lauffläche- äußere Spurkranzflanke
3    Profilbereich innere Spurkranzflanke
4    Drehrichtung des Rades/ Radsatzes
5    Werkzeugaufnahme
6    Zustellrichtung des Fräswerkzeuges axial
7    Zustellrichtung des Fräswerkzeuges radial
8    Drehrichtung des Fräswerkzeuges
9    erster Schneidenkranz des achssenkrechten Fräswerkzeuges
10    zweiter Schneidenkranz des achssenkrechten Fräswerkzeuges
11    Fräswerkzeug mit zwei Schneidenkränzen
12    Drehrichtung des Fräswerkzeuges mit zweiten Schneidenkranz
13    Fräswerkzeug, achsparallel
14    Drehrichtung des achsparallelen Fräswerkzeuges
15    erster Schneidenkranz des achsparallelen Fräswerkzeuges
16    zweiter Schneidenkranz des achsparallelen Fräswerkzeuges
17    kombiniertes Drehfräswerkzeug
18    Umfangsprofilfräser für die Lauffläche
19    Profilbereich Lauffläche des Radprofiles
20    erster Schneidenkranz des kombinierten Drehfräswerkzeuges
21    Profilbereich- Fase
22    Profilbereich äußere Spurkranzflanke
23    zweiter Schneidenkranz des kombinierten Drehfräswerkzeuges

Die Erfindung wird beispielsweise an einer üblichen Radsatzbearbeitungsmaschine für die Unter- oder Überflurbearbeitung mit zwei Maschineneinheiten bei gleichzeitiger Profilbearbeitung des Radsatzes erläutert.

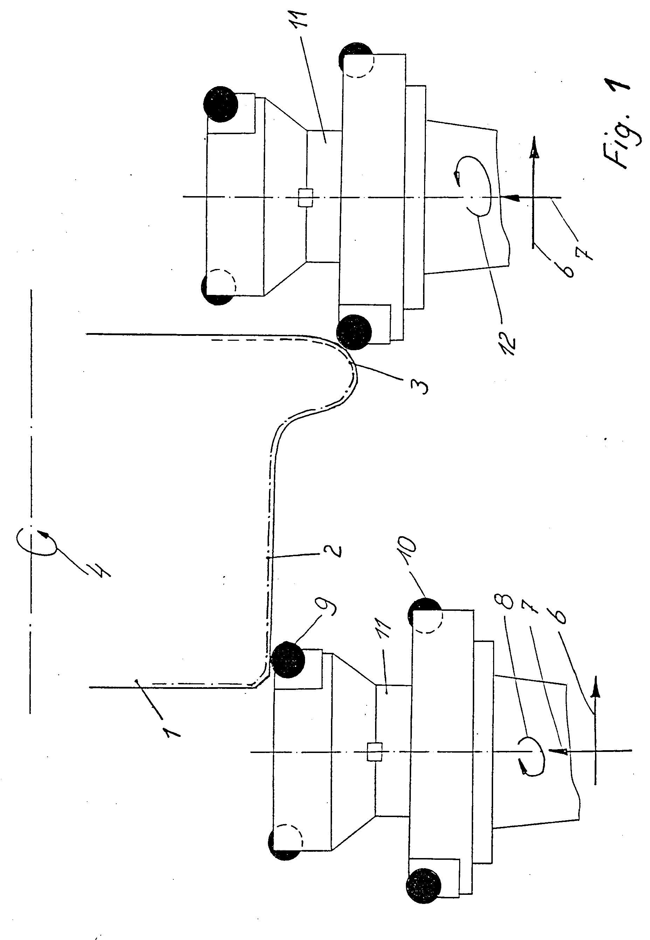

In Fig. 1 ist der Radsatz (1) mit Drehrichtung (4) und das Fräswerkzeug (11) dargestellt. Am Fräswerkzeug (11) sind zwei Schneidenkränze (9) und (10) mit entgegengesetzter Zerspanungsrichtung angebracht. Der Profilbereich (2) wird durch den Schneidenkranz (9) bearbeitet. Dabei läuft das Fräswerkzeug mit der Drehrichtung (8). Der Profilbereich (3) wird mit dem Schneidenkranz (10) und der Drehrichtung (12) des Fräswerkzeuges bearbeitet.

Dabei entsteht annähernd die gleiche Spanflugrichtung. Die Spanflugrichtung ist von der Drehrichtung des Fräswerkzeuges abhängig. Mit den Zustellrichtungen (6) und (7) sind die axialen bzw. radialen Zustellrichtungen des Fräswerkzeuges dargestellt. Die Reihenfolge der Bearbeitung ist beliebig. Die Laufflächenfase (21) und die Stirnseiten sind ebenfalls mit den Fräswerkzeugen bearbeitbar.

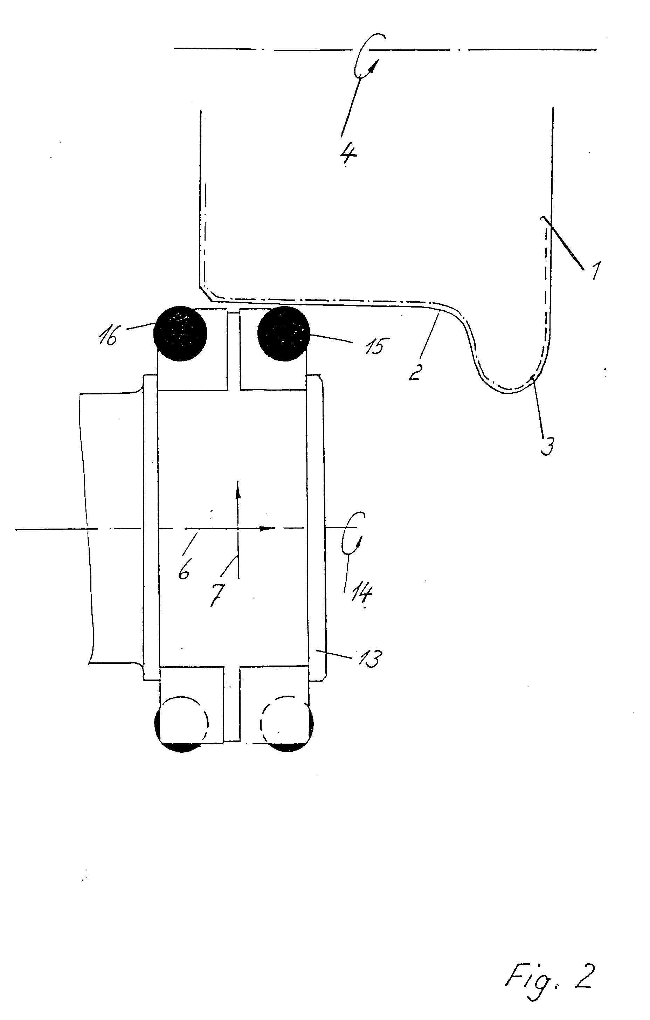

In Fig. 2 wird die Bearbeitung des Radsatzes (1) mit einem scheibenförmigen Fräswerkzeug nach dem Verfahren achsparalleles CNC-Profildrehfräsen, ohne Speicherung des Profils, dargestellt. Die Führung des Fräswerkzeuges (13) erfolgt ebenfalls CNC-gesteuert. Bei Bearbeitung des Profilbereiches (2) wird mit dem ersten Schneidenkranz (15) das Profil bis zur Spurkranzkuppe hergestellt. Danach wird mit dem zweiten Schneidenkranz (16) der restliche Profilbereich (3) bearbeitet. Bei diesen Verfahren ist immer eine konstante Spanflugrichtung vorhanden. Es besteht die Möglichkeit im Gegen- oder Gleichlauf die Bearbeitung bei entspresprechender Zuordnung der Drehrichtungen (4) bzw. (14) durchzuführen. Die vorspringenden Schneidenplatten ermöglichen die Stirnseitenbearbeitung. Andererseits kann die Stirnseitenbearbeitung natürlich auch bei nicht vorspringenden Schneidenplatten durch entsprechende Anstellung der Werkzeugachse erfolgen.

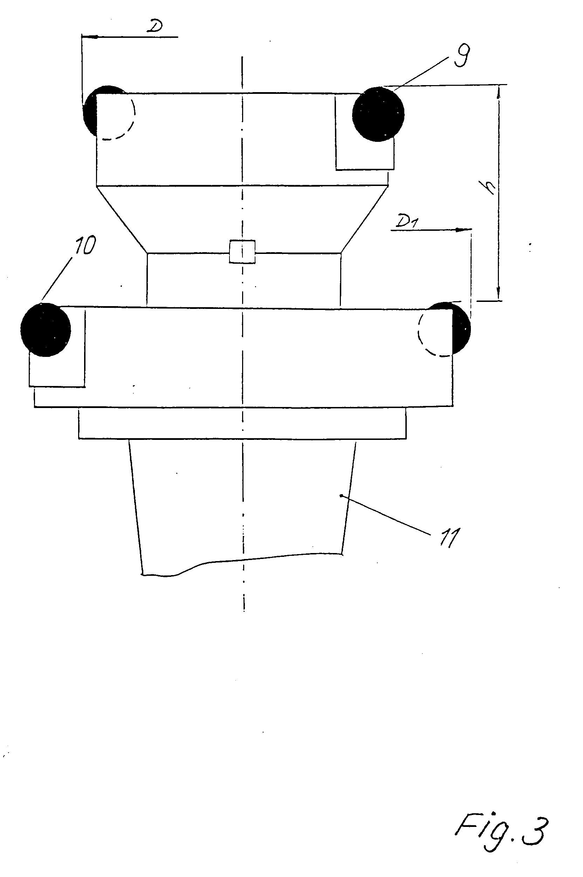

Die Fig. 3 zeigt ein Fräswerkzeug (11) mit zwei Schneidenkränzen . Die Anordnung des er sten Schneidenkranzes (9) erfolgte in entgegengesetzter Zerspanungsrichtung zur Anordnung des zweiten Schneidenkranzes (10). Diese konstruktive Gestaltung wurde gewählt um bei der Bearbeitung die gleiche Spanflugrichtung einzuhalten bei hoher Produktivität und Standzeit des Werkzeuges.

Um die notwendigen Freiheitsgrade während der Profilbearbeitung zu gewährleisten wurden folgende Beziehungen hinsichtlich des Durchmessers und des Abstandes der Schneidenkränze gewählt:

$$h = S_h + V + S$$

$$D = \tfrac{1}{2} S_d + S$$

Dabei bedeuten:

V -        Verschleiß
$S_h$ -        Spurkranzhöhe
$S_d$ -        Spurkranzdicke
S -        Sicherheitsabstand

Diese Beziehungen können natürlich auch dem jeweilig zu bearbeitenden Profil anderweitig angepaßt werden. Mit diesem Werkzeug wird achssenkrechtes Profildrehfräsen durchgeführt.

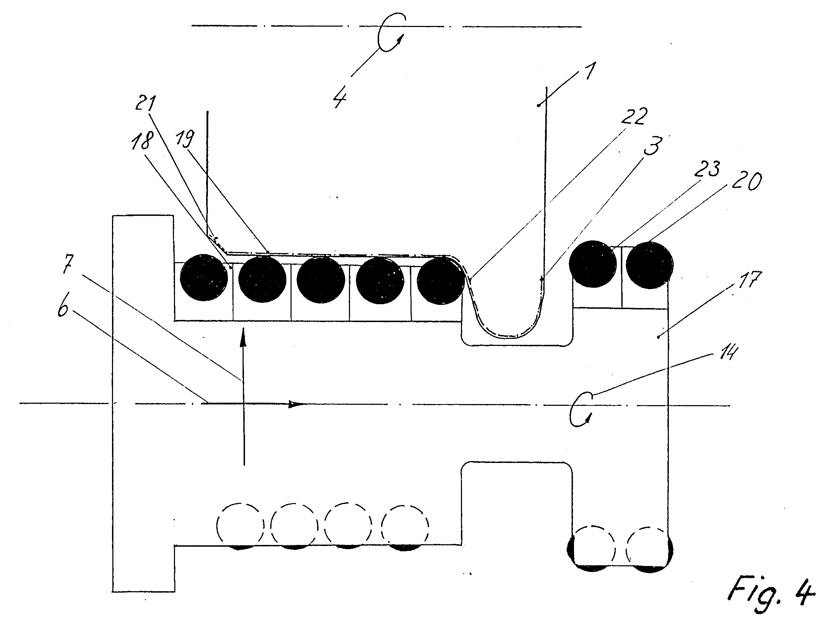

In Fig. 4 ist ein Fräswerkzeug (17) als Kombination aus Umfangsprofilfräser und einem achsparallelen Profildrehfräser dargestellt. Das durch die Schneidenkränze (18) gespeicherte Laufflächenprofil bearbeitet den Profilbereich (19) im Umfangsprofilfräsverfahren. Der Kranz Wendeschneidplatten (20) wird für die Fase (21) und den Profilbereich (22) und der Schneidenkranz (23) für den Profilbereich (3) genutzt. Mit der Drehrichtung (4) des Radsatzes (1) und der Drehrichtung (14) des Fräswerkzeuges (17) ergibt sich Gegenlauffräsen. Durch die Änderung der Drehrichtung des Rades oder Werkzeuges ist auch Gleichlauffräsen möglich.

Die Spanflugrichtung ist nur von der Drehrichtung des Fräswerkzeuges abhängig. Für das Umfangsprofilfräsen wird die Zustellrichtung (7) und für das bahngesteuerte Profildrehfräsen die Zustellrichtungen (6) und (7) angewendet.

**Patentansprüche**

1. Verfahren zur Radsatzbearbeitung durch spangebende Profilierung der Radsätze (1) schienengebundener Fahrzeuge mittels eines Fräswerkzeuges auf einer Radsatzbearbeitungsmaschine mit kraftschlüssigem Drehantrieb der Radsätze gekennzeichnet, durch die Anwendung des 2- achsig (axial und radial) CNC- gesteuerten achsparallelen oder achssenkrechten Profil-Drehfräsens, wobei mindestens ein Fräswerkzeug (11, 13, 17, 18) verwendet wird, welches das Radprofil nicht oder nur teilweise gespeichert hat und mit wenigstens zwei Schneidenkränzen mit für das achsparallele Profildrehfräsen gleicher und für das achssenkrechte Profildrehfräsen einander entgegengesetzter Dreh- bzw. Schnittrichtung, wobei zur Bearbeitung des gesamten oder teilweisen Rad- Profilbereiches durch einen ersten Schneidenkranz ein erster Radprofilbereich und mit einem weiteren Schneidenkranz, ein weiterer Radprofilbereich oder Restradprofilbereich bei jeweils annähernd gleicher Spanflugrichtung erzeugt wird.

2. Verfahrens nach Anspruch 1 dadurch gekennzeichnet,daß beim achssenkrechten Profildrehfräsen das gesamte Radprofil ohne Drehrichtungsänderung des Rades, bei Drehrichtungsänderung des Fräswerkzeuges, am Scheitelpunkt des Radprofiles im Bereich der Spurkranzkuppe, bearbeitet wird.

3. Verfahren nach Anspruch 1 oder 2, dadurch gekennzeichnet, daß beim achssenkrechten Profildrehfräsen die Drehachse des Fräswerkzeuges nur annähernd rechtwinklig zur Radsatzdrehachse ausgerichtet wird, bei einer vorzugsweisen Exzentrizität = 0.

4. Radsatzbearbeitungsmaschine mit kraftschlüssigem Drehantrieb der Radsätze, zur spanenden Profilierung der Radsätze (1) schienengebundener Fahrzeuge mit wenigstens einem Fräswerkzeug (11, 13, 17, 18) zur Durchführung des Verfahrens nach Anspruch 1 oder 2 dadurch gekennzeichnet, daß das oder die Fräswerkzeuge, das (die) das Radprofil nicht oder nur teilweise gespeichert hat (haben), zum 2- achsig (axial u. radial) CNC- gesteuerten achsparallelen oder achssenkrechten Profildrehfräsen achsparallel oder achssenkrecht zur Radsatzdrehachse ausrichtbar ist (sind), und wenigstens zwei Schneidenkränze (9, 10; 15, 16) aufweist (aufweisen), mit für das achsparallele Profildrehfräsen gleicher und für das achssenkrechte Profildrehfräsen einander entgegengesetzter Schnitt- bzw. Bearbeitungsrichtung, wobei die Drehrichtung des Fräswerkzeuges umkehrbar ist.

5. Radsatzbearbeitungsmaschine nach Anspruch 4 dadurch gekennzeichnet, daß das Schneidenprofil mindestens eines Schneidenkranzes einen Radius der gleich oder Kleiner dem Kleinsten konkaven Radius im zu erzeugenden Radprofil ist, aufweist.

6. Radsatzbearbeitungsmaschine nach Anspruch 4 oder 5 dadurch gekennzeichnet, daß die Schneidenkränze des Drehfräsers mit Wendeschneidplatten, vorzugsweise Rundschneidplatten, bestückt sind.

7. Radsatzbearbeitungsmaschine nach einem der Ansprüche 4 bis 6 dadurch gekennzeichnet, daß das Fräswerkzeug bei achsparalleler Anordnung, aus einem Umfangsprofilfräser der das Radprofil teilweise gespeichert hat, einem Freiraum für den Spurkranz bei achsparalleler Anordnung und zusätzlich aus mindestens einem Schneidenkranz für die Restradprofilbearbeitung durch CNC- Profildrehfräsen, besteht.

## Claims

1. Wheelset truing process for stock-removal profiling of wheelsets of railroad vehicles by means of a milling cutter on a wheelset truing machine with non-positive rotary drive of wheelsets characterized by the application of the biaxial (axial and radial) CNC-controlled axially parallel or axially perpendicular profile mill-turning using at least one milling cutter having stored the wheel profile not or only partially and fitted with at least two edge crowns with a sense of rotation or cutting direction being equal for axially parallel profile mill-turning and opposite to each other for axially perpendicular profile mill-turning generating a first wheel profile area by a first edge crown and another wheel profile area or residual profile area by another edge crown for machining the entire wheel profile area or parts thereof with approximately equal direction of chip fly.

2. Process as recited in claim 1 characterized in that the entire wheel profile is machined during axially perpendicular profile mill-turning without changing the sense of rotation of the wheel with changing the sense of rotation of the milling cutter at the vertex of wheel profile in the area of wheel flange crest.

3. Process as recited in claim 1 or 2 characterized in that the axis of rotation of the milling cutter is aligned only approximately in perpendicular to the axis of rotation of the wheelset during axially perpendicular profile mill-turning with a preferred eccentricity of 0.

4. Wheelset truing machine with non-positive rotary drive of wheelsets for stock-removal profiling of wheelsets of railroad vehicles with at least one milling cutter for accomplishment of the process as recited in claim 1 or 2 characterized in that the milling cutter(s) has(have) stored the wheel profile not or only partially and can be adjusted axially parallel or axially perpendicular to the axis of rotation of the wheelset for biaxial (axial and radial) CNC-controlled axially parallel or axially perpendicular profile mill-turning and fitted with at least two edge crowns with cutting or machining direction being equal for axially parallel profile mill-turning and opposite to each other for axially perpendicular profile mill-turning with reversing sense of direction of the milling cutter.

5. Wheelset truing machine as recited in claim 4 characterized in that the edge profile of at least one edge crown has a radius being equal to or smaller than the smallest concave radius in the wheel profile to be generated.

6. Wheelset truing machine as recited in claim 4 or 5 characterized in that the edge crown of mill-turning cutter are fitted with indexable tips, preferably with rounded carbide tips.

7. Wheelset truing machine as recited in one of the claims 4 through 6 characterized in that the milling cutter with axially parallel or axially perpendicular arrangement consists of a circumferential profile milling cutter having partially stored the wheel profile, a clearance for the wheel flange with axially parallel arrangement and additionally of at least one edge crown for machining the residual wheel profile by means of CNC profile mill-turning.

## Revendications

1. Le procédé de reprofilage à enlèvement de copeaux d'essieux montés (1) de véhicules ferroviaires guidés par un outil de fraisage sur une machine à reprofiler les roues à entraînement tournant par adhérence des essieux montés est caractérisé par l'application du reprofilage par tournage-fraisage parallèle ou perpendiculaire à l'axe à commande CNC à deux axes (axialement et radialement); il y est utilisé au moins un outil de fraisage (11, 13, 17, 18) n'étant pas ou que partiellement adapté au profil de roue et étant équipé d'au moins deux couronnes de plaquettes à un sens de rotation conforme au sens de coupe dans le cas d'un reprofilage par tournage-fraisage parallèle à l'axe et contraire au sens de coupe dans le cas d'un reprofilage par tournage-fraisage perpendiculaire à l'axe; à l'usinage de la zone complète ou partielle du profil de roue, il y est usiné une première tranche du profil de roue par une première couronne de plaquettes et une deuxième tranche du profil de roue ou bien une tranche résiduelle du profil de roue par une deuxième couronne de plaquettes à une direction à peu près identique de projection de copeaux.

2. Le procédé selon la revendication 1 est caractérisé par le fait que dans le cas d'un reprofilage par tournage-fraisage perpendiculaire à l'axe, il est usiné tout le profil de la roue sans inverser le sens de rotation de la roue à changement de sens de rotation de l'outil de fraisage au sommet du profil de roue dans la zone du sommet de boudin.

3. Le procédé selon la revendication 1 ou 2 est caractérisé par le fait que dans le cas d'un reprofilage par tournage-fraisage perpendiculaire à l'axe, l'axe de rotation de l'outil de fraisage n'est positionné qu'à peu près perpendiculairement à l'axe de rotation de l'essieu monté à une excentricité de préférence égale à 0.

4. La machine à reprofiler les roues à entraînement tournant par adhérence des essieux montés pour le reprofilage à enlèvement de copeaux des essieux montés (1) de véhicules ferroviaires guidés équipée d'au moins un outil de fraisage (11, 13, 17, 18) pour la réalisation du procédé selon la revendication 1 ou 2 est caractérisée par le fait que l'outil (les outils) de fraisage n'étant pas ou que partiellement adapté(s) au profil de roue peut (peuvent) être positionné(s) parallèlement ou perpendiculairement à l'axe de rotation de l'essieu monté dans le cas d'un reprofilage par tournage-fraisage parallèle ou perpendiculaire à l'axe à 2 axes (axialement et radialement) à commande CNC et est (sont) équipé(s) d'au moins deux couronnes de plaquettes (9, 10, 15, 16) à un sens de coupe conforme au sens d'usinage dans le cas d'un reprofilage par tournage-fraisage parallèle à l'axe et contraire au sens d'usinage dans le cas d'un reprofilage par tournage-fraisage perpendiculaire à l'axe e sens de rotation de l'outil de fraisage peut être inversé.

5. La machine à reprofiler les roues selon la revendication 4 est caractérisée par le fait que le rayon du profil de plaquette d'au moins une couronne de plaquettes est égal ou plus petit que le rayon concave minimal du profil de roue à usiner.

6. La machine à reprofiler les roues selon la revendication 4 ou 5 est caractérisée par le fait que les couronnes de plaquettes de l'outil se composent de plaquettes coupantes, de préférence de plaquettes coupantes réversibles.

7. La machine à reprofiler les roues selon l'une des revendications 4 à 6 est caractérisée par le fait que l'outil de fraisage en position parallèle à l'axe se compose d'une fraise à profiler périphériquement adaptée partiellement au profil de roue, d'un espace libre pour le boudin dans le cas d'une disposition parallèle à l'axe et d'au moins une couronne de plaquettes pour le reprofilage résiduel par tournage-fraisage à commande CNC.

Fig. 1

Fig. 2

Fig.3

Fig. 4